# EUROPÄISCHE PATENTANMELDUNG

(11) **EP 4 382 577 A1**
(43) Veröffentlichungstag der Anmeldung: **12.06.2024**
(21) Anmeldenummer: 23214381.8
(22) Anmeldetag: 05.12.2023
(51) Int. Cl.: C09D 7/65, E04F 15/02, E04F 15/04, C09D 175/04, C09D 101/02, C09D 7/40, C09D 167/04, C08L 97/00

(54) **BESCHICHTUNG FÜR EIN FUSSBODENELEMENT UND EIN FUSSBODENELEMENT ZUR SCHALLREDUZIERUNG**

(30) Priorität: 08.12.2022 DE 102022132637
(71) Anmelder: Stranak, Walter, 97922 Lauda-Königshofen (DE)
(72) Erfinder: Stranak, Walter, 97922 Lauda-Königshofen (DE)
(74) Vertreter: Gleim, Christian Ragnar

(57) **Zusammenfassung**

Beschichtung für ein Fußbodenelement umfassend einen Beschichtungslack zum Auftragen auf das Fußbodenelement, wobei der Beschichtungslack ein Korkpulver umfasst.

## Beschreibung

Die Erfindung betrifft eine Beschichtung für ein Fußbodenelement und ein Fußbodenelement zur Schallreduzierung.

Die Verwendung von Fußbodenelementen ist in der Form von Bodenpaneelen weit verbreitet. Dabei kann zum Beispiel ein Sandwich-Paneel, das aus mehreren Schichten unterschiedlichen Materials besteht, verwendet werden. Dabei erfüllen die verschiedenen Schichten diverse Zwecke, beispielsweise Schall- oder Wärmedämmung, Verbesserung der mechanischen Belastbarkeit oder Wetterbeständigkeit. Besondere Verzahnungsstrukturen ermöglichen die Verwendung von Paneelen zur schnellen Herstellung von geschlossenen Bodenflächen.

Es ist auch bekannt Korkböden herzustellen, die zum Beispiel aus Korkelementen bestehen. Kork ist wasserabweisend und daher sehr pflegeleicht. Korkböden nehmen weder Staub noch Milben auf. Der Korkboden wird entweder mit dem Untergrund verleimt oder schwimmend verlegt, je nach Art des Korkbodens, wobei Fliesen üblicherweise verleimt werden und Fertigparkett schwimmend verlegt wird.

Zur Wärme- und Schalldämmung ist es bekannt unter die Paneele eine Schicht aus Kork zu legen. Bodenpaneele werden direkt auf vollflächig verklebtem Kork verlegt. Oft dient Kork unter Laminat verlegt als vollflächige Trittschalldämmungslage.

Ferner sind die DE 697 13 272 T2, die DE 94 08 303 U1, die DE 20 2011 110 057 U1 und die DE 10 2007 019 978 B3 bekannt.

Ein Nachteil bekannter Lösungen besteht darin, dass zur Trittschalldämmung aufwendig eine eigene Lage verlegt werden muss. Dies gilt insbesondere wenn eine Lage aus Kork verklebt wird.

Es ist die Aufgabe der Erfindung eine Beschichtung für ein Fußbodenelement und ein Fußbodenelement zur Schallreduzierung zur Verfügung zu stellen, das die Nachteile im Stand der Technik überwindet und insbesondere einfach herzustellen ist.

Diese Aufgabe wird durch eine Beschichtung für ein Fußbodenelement zur Schallreduzierung und ein Fußbodenelement gemäß dem jeweiligen unabhängigen Anspruch gelöst. Vorteilhafte Ausgestaltungen bilden den Gegenstand der jeweiligen Ansprüche.

Die Erfindung umfasst eine Beschichtung für ein Fußbodenelement umfassend einen Beschichtungslack zum Auftragen auf das Fußbodenelement, wobei der Beschichtungslack ein Korkpulver umfasst. Der Beschichtungslack ist ein gut verarbeitbares Bindemittel für das darin homogen verteilte Korkpulver. Diese Kombination hat den besonderen Vorteil der leichten maschinellen Verarbeitbarkeit. Es hat sich überraschend gezeigt, dass die Schalleigenschaften von Fußbodenelementen ganz maßgeblich positiv durch die hier vorgeschlagene rückseitige Beschichtung verändert werden.

Gemäß einem vorteilhaften Aspekt weist der Beschichtungslack eine Stärke im Bereich von 0,05 bis 1,5 mm auf. Derartige Schichtstärken können vorteilhaft in einem Zug aufgetragen werden. Vorteilhafterweise hat der jeweilige Beschichtungslack eine Viskosität, die geeignet ist, diesen maschinell zum Beispiel mittels Auftragswalze zu verarbeiten. Für diese Anwendung ist der Bereich von 0,05 mm bis 0,3 mm besonders bevorzugt.

Vorteilhafterweise besteht der Beschichtungslack nur aus natürlichen Bestandteilen, synthetischen Bestandteilen oder Mischungen daraus. Je nach Anforderung kann so eine kostengünstige oder umweltfreundliche Beschichtung erzeugt werden, um anwendungsspezifische Beschichtungen (z.B. geeignet für Wohnraum) zu erzeugen.

Bevorzugt ist der Beschichtungslack ein Kunstharz-, Alkydharz-, Polyurethan- oder Nitrocelluloselack. Bei diesen Beispielen lassen sich bekannte Lackauftragsverfahren einsetzen. Zum Beispiel kann ein Beschichtungslack wässrige Lacke, synthetische Lacke, wie Polyester, Polyurethan, Epoxy, Acrylate, etc. umfassen.

Vorteilhafterweise weist das Korkpulver eine Körnung im Bereich von 0,1 bis 1 mm auf. Diese Körnung erlaubt eine einfache Verarbeitung und hat die entsprechende Schallreduzierung gewährleistet. Besonders bevorzugt wird der Bereich von 0,1 mm bis 0,3 mm für die maschinelle Verarbeitung.

Ferner bevorzugt hat Korkpulver eine Körnung einer einzigen Korngröße oder verschiedener Korngrößen. Die Bandbreite der verwendeten Korngrößen kann dabei hinsichtlich der gewünschten Verarbeitbarkeit angepasst werden. Bei der industriellen Verarbeitung erzeugt die Verwendung einer einzigen Korngröße eine gute und gleichbleibende Qualität.

Besonders bevorzugt liegt der Anteil am Korkpulver im Beschichtungslack im Bereich von 5 vol% bis 50 vol%.

Gemäß einem weiteren Aspekt betrifft die Erfindung ein Fußbodenelement umfassend einen Beschichtungslack zum Auftragen auf das Fußbodenelement, wobei der Beschichtungslack ein Korkpulver umfasst, und wobei der Beschichtungslack in mindestens einer Lage auf einer, einer Sichtseite gegenüberliegenden Seite, des Fußbodenelements aufgebracht ist. Der Beschichtungslack wird dabei bei der Herstellung des Fußbodenelements oder bei der Verarbeitung aufgebracht.

Gemäß einem vorteilhaften Aspekt wird der Beschichtungslack in einer Dicke von 0,05 bis 0,3 mm aufgebracht.

Besonders bevorzugt wird der Beschichtungslack in einer einzigen Lage über eine volle Fläche des Fußbodenelements (in einem Zug) aufgebracht.

Im Folgenden wird die Erfindung anhand der in den beigefügten Zeichnungen dargestellten Beispiels näher erläutert.

Es zeigen:
- Fig. 1: eine Beschichtung zur Schallreduzierung, die auf einem Fußbodenelement auf gebracht ist; und
- Fig. 2: eine Detailansicht der Beschichtungslage aus Fig. 1.

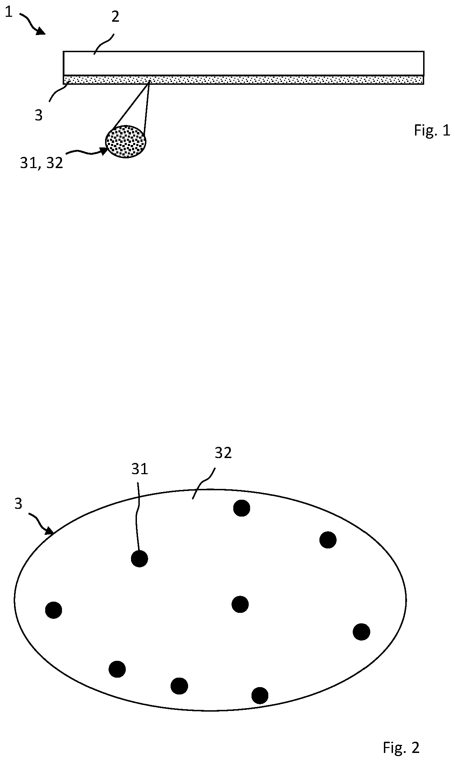

In **Fig. 1** ist ein flächiges Fußbodenelement 1 (bzw. der Abschnitt eines Fußbodenbelags) im seitlichen Querschnitt gezeigt. Die obere Sichtseite 2 ist entsprechend der gewünschten Optik zum Beispiel mit einem Furnier gestaltbar. Die Art des Fußbodenelements 1 ist grundsätzlich hinsichtlich der Form und Größe nicht beschränkt. Besonders vorteilhaft ist es aber auf Basis des Werkstoffs Holz hergestellt, d.h. es umfasst zumindest eine Lage, die den Werkstoff Holz aufweist.

Auf der unteren, der Sichtseite gegenüberliegenden Seite, des Fußbodenelements 1 ist eine Beschichtung 3 gemäß der Erfindung zur Verbesserung der Eigenschaften in Bezug auf beim verlegten Boden auftretenden Schall. Die Beschichtung 3 umfasst einen Beschichtungslack 31 zum Auftragen auf das Fußbodenelement 1. Der Beschichtungslack 3 ist im gezeigten Beispiel in genau einer Lage auf der, der Sichtseite gegenüberliegenden Seite, des Fußbodenelements 1 aufgebracht.

Der Beschichtungslack 31 umfasst einen ein Korkpulver 32 bzw. ist das Korkpulver 32 in dem Beschichtungslack 31 aufgenommen (dispergiert oder darin gleichförmig verteilt), um die Schalleigenschaften eines mit den Fußbodenelementen 1 gestalteten Bodens zu ändern, insbesondere hinsichtlich Trittschall.

Im gezeigten Beispiel ist der Beschichtungslack 31 in einer Dicke von 0,05 bis 0,3 mm aufgebracht. Der Beschichtungslack 31 besteht bevorzugt nur aus natürlichen Bestandteilen, synthetischen Bestandteilen kann aber auch aus Mischungen daraus bestehen. Beispielsweise ist der Beschichtungslack 31 ein Kunstharz-, Alkydharz-, Polyurethan- oder Nitrocelluloselack.

Im gezeigten Beispiel weist das Korkpulver 32 eine Körnung im Bereich von 0,1 bis 1 mm auf. Vorteilhafterweise hat das Korkpulver 32 eine Körnung einer einzigen Korngröße, es können aber auch vorbestimmte Bandbreiten von verschiedenen Korngrößen eingesetzt werden.

Der Anteil am Korkpulver 32 im Beschichtungslack 31 liegt im Bereich von 5 vol% bis 50 vol%.

In **Fig. 2** ist eine vergrößerte Detailansicht der Beschichtung 3 aus Fig. 1 dargestellt, indem ein Ausschnitt stark vergrößert dargestellt ist, wie er Teil der Beschichtung ist. Der Beschichtungslack 31 umfasst darin gleichförmig verteilt das Korkpulver 32 in einer einzigen Korngröße.

## Patentansprüche

1. Beschichtung für ein Fußbodenelement umfassend einen Beschichtungslack zum Auftragen auf das Fußbodenelement, wobei der Beschichtungslack ein Korkpulver umfasst.

2. Beschichtung nach Anspruch 1, wobei der Beschichtungslack eine Stärke im Bereich von 0,05 mm bis 1,5 mm aufweist.

3. Beschichtung nach Anspruch 1 oder 2, wobei der Beschichtungslack nur aus natürlichen Bestandteilen, synthetischen Bestandteilen oder Mischungen daraus besteht.

4. Beschichtung nach Anspruch 3, wobei der Beschichtungslack ein Kunstharz-, Alkydharz-, Polyurethan- oder Nitrocelluloselack ist.

5. Beschichtung nach einem der vorangehenden Ansprüche, wobei das Korkpulver eine Körnung im Bereich von 0,1 mm bis 1 mm aufweist.

6. Beschichtung nach Anspruch 5, wobei das Korkpulver eine Körnung einer einzigen Korngröße oder verschiedener Korngrößen hat.

7. Beschichtung nach einem der vorangehenden Ansprüche, wobei der Anteil am Korkpulver im Beschichtungslack im Bereich von 5 vol% bis 50 vol% liegt.

8. Fußbodenelement umfassend einen Beschichtungslack zum Auftragen auf das Fußbodenelement, wobei der Beschichtungslack ein Korkpulver umfasst, und wobei der Beschichtungslack in mindestens einer Lage auf einer, einer Sichtseite gegenüberliegenden Seite, des Fußbodenelements aufgebracht ist.

9. Fußbodenelement nach Anspruch 8, wobei der Beschichtungslack in einer Dicke von 0,05 bis 0,3 mm aufgebracht wurde.

10. Fußbodenelement nach Anspruch 8 oder 9, wobei der Beschichtungslack in einer einzigen Lage aufgebracht wurde.
